# EUROPÄISCHE PATENTSCHRIFT

(11) **EP 1 295 105 B1**
(45) Veröffentlichungstag und Bekanntmachung des Hinweises auf die Patenterteilung: **17.02.2010**
(21) Anmeldenummer: 01947395.8
(22) Anmeldetag: 25.06.2001
(51) Int. Cl.: G01N 15/14

(54) **VERFAHREN ZUR SELEKTION VON PARTIKELN**
METHOD FOR SELECTING PARTICLES
PROCEDE DE SELECTION DE PARTICULES

(30) Priorität: 26.06.2000 DE 10031028
(43) Veröffentlichungstag der Anmeldung: 26.03.2003
(73) Patentinhaber: Gnothis Holding SA, 1015 Ecublens (CH)
(72) Erfinder: RIGLER, Rudolf, CH-1025 St-Sulpice (CH)
(74) Vertreter: Weiss, Wolfgang
(86) Internationale Anmeldenummer: PCT/EP2001/007190
(87) Internationale Veröffentlichungsnummer: WO 2002/001189

(56) Entgegenhaltungen:
- WO-A-91/15750
- WO-A-99/66318
- US-A- 3 827 555
- US-A- 5 837 200

## Beschreibung

Die Erfindung betrifft ein Verfahren zur Selektion von Partikeln mit einer vorbestimmten Eigenschaft aus einer Population einer Vielzahl unterschiedlicher Partikel sowie eine zur Durchführung des Verfahrens geeignete Vorrichtung.

Zur Identifizierung neuer Liganden für diagnostische, biomedizinische und pharmazeutische Anwendungen können kombinatorische Bibliotheken, bestehend aus einer Population einer Vielzahl von Partikeln, z.B. Phagen, Zellen, Ribosomen etc., eingesetzt werden, wobei die einzelnen Partikel jeweils unterschiedliche Liganden präsentieren (siehe z.B. WO90/02809; WO92/15677;WO92/15679;WO92/06204;WO92/06176;WO98/19162; WO98/35232; WO99/06839 und W099/5428). Zur Identifizierung von Liganden mit einer vorbestimmten Eigenschaft wird üblicherweise eine Musterung der zu untersuchenden Bibliothek durchgeführt, wobei ein markiertes Zielmolekül mit den einzelnen Partikeln der Bibliothek in Kontakt gebracht wird und das Auftreten einer Bindung zwischen dem Zielmolekül und einem bestimmten Partikel der Bibliothek bzw. dem von dem Partikel präsentierten Liganden bestimmt wird. Anschließend muss das Partikel mit der vorbestimmten Eigenschaft identifiziert werden. Bisherige Selektions- und Identifizierungsmethoden, z.B. die sogenannten "Penning"- oder "Selex"-Verfahren haben jedoch eine relativ geringe Effizienz, sodass ein bestimmtes Partikel mit gewünschten Eigenschaften oftmals nicht in der Bibliothek gefunden werden kann, obwohl es dort vorhanden ist.

Ein direkter Nachweis von einzelnen Analytmolekülen ist mit dem im europäischen Patent 0 679 251 beschriebenen Verfahren zur Fluoreszenz-Korrelationsspektroskopie (FCS) beschrieben. Mittels FCS kann in einem kleinen Messvolumen von beispielsweise < 10⁻¹⁴ l ein einziges oder nur wenige mit Fluoreszenzfarbstoffen markierte Moleküle nachgewiesen werden. Das Messprinzip der FCS beruht darauf, dass ein kleines Volumenelement der Probeflüssigkeit einem starken Anregungslicht, z.B. eines Lasers ausgesetzt wird, sodass nur die jenigen Fluoreszenzmoleküle, die sich in diesem Messvolumen aufhalten, angeregt werden. Das emittierte Fluoreszenzlicht aus diesem Volumenelement wird dann auf einen Detektor, z.B. einen Fotomultiplyer abgebildet. Ein Molekül, das sich im Volumenelement befindet, wird sich gemäß seiner charakteristischen Diffusionsgeschwindigkeit mit einer durchschnittlichen, aber für das betreffende Molekül charakteristischen Zeit wieder aus dem Volumenelement entfernen und dann nicht mehr zu beobachten sein.

Wird nun die Lumineszenz ein- und desselben Moleküls während seiner durchschnittlichen Aufenthaltsdauer in dem Messvolumen mehrmals angeregt, so lassen sich von diesem Molekül viele Signale erfassen.

Die Anwendung der Fluoreszenz-Korrelationsspektroskopie zur Sortierung und Identifizierung einzelner Moleküle ist bei Eigen und Rigler (Proc. Natl. Acad. Sci. USA 91 (1994), 5740-5747) und Rigler (J. Biotech. 41 (1995), 177-186) beschrieben. Es wird die Verwendung einer Quadrupol-Falle und elektrischer Feldgradienten in Verbindung mit Einzelphotonendetektoren zur Identifizierung von Einzelmolekülen vorgeschlagen. Obwohl dieses Verfahren gegenüber den klassischen Selektionierungsprozeduren eine erheblich höhere Effizienz aufweist, erfordert die Selektion von Einzelmolekülen die Verwendung extrem geringer Partikelkonzentrationen und istzeitaufwendig. Es besteht daher ein Bedürfnis, die Sensitivität und Effizienz bei der Selektionierung von Partikeln zu verbessern.

Diese Aufgabe wird gelöst durch ein Verfahren zur Selektion eines Partikels mit einer vorbestimmten Eigenschaft aus einer Population einer Vielzahl unterschiedlicher Partikeln, umfassend die Schritte:
(a) Bereitstellen einer Population von unterschiedlichen Partikeln,
(b) Markieren von Partikeln, die die vorbestimmte Eigenschaft aufweisen,
(c) Leiten der Partikel in einem Mikrokanal durch ein Detektionselement, das zwischen markierten und nicht markierten Partikeln unterscheiden kann, wobei das Detektionselement ein Volumen von 0,1-20 x 10⁻¹⁵ l aufweist, unter Bedingungen, bei denen neben den markierten Partikeln auch eine Anzahl nicht markierter Partikel zunächst als markiert eingestuft werden.
(d) Abtrennen der unter (c) als markiert eingestuften Partikel, und
(e) mindestens einmaliges Wiederholen der Schritte (c) und (d),
wobei die Bedingungen in Schritt (c) im ersten Zyklus der Schritte (c) und (d) eine Konzentration der Partikel im Mikrokanal von 10⁸ bis 10¹⁴ pro 100 µl Probeflüssigkeit umfassen, und wobei die Konzentration der Partikel im Probenvolumen in einem nachfolgenden Zyklus der Schritte (c) und (d) um mindestens den Faktor 10⁴ gegenüber einem vorhergehenden Zyklus verringert wird, bis markierte Partikel eindeutig als markiert identifiziert werden können.

Das erfindungsgemäße Verfahren ermöglicht die Selektion von einzelnen Partikeln aus sehr großen Partikelpopulationen, die beispielsweise mehr als 10⁸ oder sogar 10¹² oder mehr unterschiedliche Partikel umfassen. Die Partikel können Zellen, Teile von Zeiloberflächen, Zellorganellen, z.B. Ribosomen, Viren wie etwa Bakteriophagen, z.B. filamentöse Phagen oder in Phagenhüllen verpackte Plasmide (Phagemide), Nukleinsäuren wie Gene oder cDNA-Moleküle, Proteine wie etwa Enzyme oder Rezeptoren, oder niedermolekulare Substanzen sein. Vorzugsweise sind die Partikel Elemente einer kombinatorischen Bibliothek, z.B. einer Bibliothek von genetischen Packungen wie Phagen, Zellen, Sporen oder Ribosomen, die auf ihrer Oberfläche Peptidstrukturen, z.B. lineare oder zirkuläre Peptide, oder Proteine wie Antikörper, vorzugsweise fusioniert mit Oberflächenproteinen, z.B. Oberflächenproteinen von filamentösen Phagen, präsentieren.

Das erfindungsgemäße Verfahren ermöglicht eine effiziente Selektion eines Partikels mit einer vorbestimmten Eigenschaft aus einer Vielzahl unterschiedlicher Partikel. Unter "vorbestimmte Eigenschaft" im Sinne der vorliegenden Erfindung ist vorzugsweise die Fähigkeit zur Bindung an eine Zielsubstanz zu verstehen. Die Bindung des Partikels an die Zielsubstanz kann eine Liganden-Rezeptor-Bindung, eine Enzym-Substrat-Bindung, eine Antikörper-Antigen-Bindung, eine Nukleinsäurehybridisierung, eine Zucker-Lectin-Bindung oder eine andere hochaffine biologische Wechselwirkung umfassen. Andererseits kann die vorbestimmte Eigenschaft des Partikels auch darin bestehen, eine biologische Wechselwirkung, z.B. die Bindung an eine Zielsubstanz, zu verhindern.

Zur Selektion des Partikels mit der vorbestimmten Eigenschaft wird die Partikelpopulation mit einer eine nachweisbare Markierung tragenden Zielsubstanz inkubiert, wobei die Inkubationsbedingungen derart gewählt werden, dass das Partikel mit der vorbestimmten Eigenschaft an eine Markierungsgruppe bindet und so von anderen Partikeln abgetrennt werden kann. Als Markierungsgruppen kommen insbesondere nicht radioaktive Markierungsgruppen und besonders bevorzugt durch optische Methoden nachweisbare Markierungsgruppen, wie etwa Farbstoffe, und insbesondere Fluoreszenzmarkierungsgruppen in Betracht. Beispiele für geeignete Fluoreszenzmarkierungsgruppen sind Rhodamin, Texas-Rot, Phycoerythrin, Fluorescein und andere in diagnostischen Verfahren oder Selektionsverfahren übliche Fluoreszenzfarbstoffe.

Die markierte Zielsubstanz ist für das zu identifizierende Partikel spezifisch, d.h. die Zielsubstanz bindet unter den Testbedingungen mit ausreichend hoher Affinität und Selektivität an das Partikel mit der vorbestimmten Eigenschaft, um eine Selektion zu ermöglichen.

Gegebenenfalls kann die vorbestimmte Eigenschaft des zu selektionierenden Partikels auch eine biologische Aktivität, z.B. eine enzymatische Aktivität sein, In diesem Fall können die Partikel mit einem chromogenen oder fluoreszenten Enzymsubstrat inkubiert und in Vesikeln, z.B. Lipidvesiklen wie Liposomen, verkapselt werden. Sofern ein Partikel, z.B. ein Phage oder ein Ribosom, an seiner Oberfläche ein aktives Enzymmolekül präsentiert, erfolgt innerhalb des Vesikels eine Umsetzung des Substrats, wobei ein farbiges oder fluoreszentes Produkt gebildet wird, welches nachgewiesen werden kann.

Zur Unterscheidung von markierten Partikeln, d.h. Partikeln mit der vorbestimmten Eigenschaft, und nicht markierten Partikeln, d.h. Partikeln ohne die vorbestimmte Eigenschaft, werden die Partikel in einem Mikrokanal durch ein Detektionselement geleitet. Das Leiten durch den Mikrokanal erfolgt vorzugsweise durch einen hydrodynamischen Fluss, beispielsweise durch Saug- oder Pumpwirkung. Der Fluss kann jedoch auch ein elektroosmotischer Fluss sein, der durch einen elektrischen Feldgradienten erzeugt wird. Weiterhin ist eine Kombination von hydrodynamischem Fluss und Feldgradienten möglich. Der Fluss durch den Mikrokanal weist vorzugsweise ein parabolisches Flussprofil auf, d.h. die Fließgeschwindigkeit ist maximal im Zentrum des Mikrokanals und nimmt in einer parabolischen Funktion zu den Rändern bis zu einer Minimalgeschwindigkeit ab. Die Flussgeschwindigkeit durch den Mikrokanal liegt im Maximumvorzugsweise im Bereich von 1 bis 50 mm/sec, besonders bevorzugt im Bereich von 5 bis 10 mm/sec. Der Durchmesser des Mikrokanals liegt vorzugsweise im Bereich von 1 bis 100 µm, besonders bevorzugt von 10 bis 50 µm. Vorzugsweise wird die Messung in einem linearen Mikrokanal mit im Wesentlichen einem konstanten Durchmesser durchgeführt.

Die Identifizierung eines markierten Partikels kann mittels einer beliebigen Messmethode, z.B. mit einer orts- und/oder zeitaufgelösten Fluoreszenz-Spektroskopie erfolgen, die in der Lage ist, in einem sehr kleinen Volumenelement wie es in einem Mikrokanal vorliegt, sehr geringe Signale von Markierungsgruppen, insbesondere Fluoreszenzsignale bis hinunter zur Einzelphotonenzählung zu erfassen. Wichtig ist dabei, dass die von markierten Partikeln stammenden Signale sich deutlich von denen unterscheiden, die von den markierten Partikeln verursacht werden.

Die Detektion erfolgt in einem Volumenelement von 0,1 -20 x 10⁻¹⁵ l.

Beispielsweise kann die Detektion mittels Fluoreszenz-Korrelationssspektroskopie erfolgen, bei der ein sehr kleines konfokales Volumenelement der durch den Mikrokanal strömenden Probeflüssigkeit einem Anregungslicht eines Lasers ausgesetzt wird, das die in diesem Messvolumen befindlichen Rezeptoren zur Emission von Fluoreszenzlicht anregt, wobei das emittierte Fluoreszenzlicht aus dem Messvolumen mittels eines Fotodetektors gemessen wird, und eine Korrelation zwischen der zeitlichen Veränderung der gemessenen Emission und der relativen Flussgeschwindigkeit der beteiligten Moleküle erstellt wird, sodass bei entsprechend starker Verdünnung einzelne Moleküle in dem Messvolumen identifiziert werden können. Auf Einzelheiten zur Verfahrensdurchführung und apparative Details zu den für die Detektion verwendeten Vorrichtungen wird auf die Offenbarung des europäischen Patentes 0 679 251 verwiesen.

Alternativ kann die Detektion auch durch eine zeitaufgelöste Abklingmessung, ein sogenanntes Time Gating erfolgen, wie beispielsweise von Rigler et al., "Picosecond Single Photon Fluorescence Spetroscopy of Nucleic Acids", in: "Ultrafast Phenomenes", D.H. Auston, Ed., Springer 1984, beschrieben. Dabei erfolgt die Anregung der Fluoreszenzmoleküle innerhalb eines Messvolumens und anschließend - vorzugsweise in einem zeitlichen Abstand von ≥ 100 ps - das Öffnen eines Detektionsintervalls am Fotodetektor. Auf diese Weise können durch Raman-Effekte erzeugte Hintergrundsignale ausreichend gering gehalten werden, um eine im Wesentlichen störungsfreie Detektion zu ermöglichen.

Besonders bevorzugt umfasst die Vorrichtung zum Nachweis von fluoreszenzmarkierten Partikeln in der den Mikrokanal durchströmenden Probeflüssigkeit einen Laser als Fluoreszenzanregungslichtquelle für die Moleküle, eine optische Anordnung zur Leitung und Fokussierung von Laserlicht des Lasers auf einen Fokalbereich des Mikrokanals und zur konfokalen Abbildung des Fokalbereichs auf eine Fotodetektoranordnung zur Erfassung von Fluoreszenzlicht, welches im Fokalbereich von einem oder gegebenenfalls mehreren optisch angeregten Molekülen emittiert wurde, wobei die optische Anordnung ein Beugungselement oder ein phasenmodulierendes Element im Strahlengang des Lasers aufweist, welches gegebenenfalls in Kombination mit einem oder mehreren optischen Abbildungselementen dazu eingerichtet ist, aus dem Laserstrahl des Lasers ein Beugungsmuster in Form eines linearen oder zweidimensionalen Arrays von Fokalbereichen in dem Mikrokanal zu erzeugen, wobei die optische Anordnung dazu eingerichtet ist, jeden Fokalbereich konfokal für die Fluoreszenzdetektion durch die Fotodetektoranordnung abzubilden. Alternativ kann die Detektionsvorrichtung zwei den Mikrokanal an einander gegenüberliegenden Seiten begrenzende Wände aufweisen, von denen eine ein Array von vorzugsweise integrierten, in den Mikrokanal emittierenden Laserelementen als Fluoreszenzanregungslichtquellen aufweist, und von denen die andere ein Array von vorzugsweise integrierten, den Laserelementen jeweils gegenüberliegend zugeordneten Fotodetektorelementen als Fluoreszenzlichtdetektoren aufweist, wobei die Laserelemente vorzugsweise Potenzialtopflaserelemente und die Fotodetektorelemente Avalanche-Dioden sind. Derartige Vorrichtungen sind beispielsweise in DE 100 23 423.2 beschrieben.

Die durch das Detektionselement identifizierten markierten Partikel werden von nicht markierten Partikeln abgetrennt. Dieses Abtrennen kann durch eine Sortierungsprozedur, wie in Holm et al. (Analytical Methods and Instrumentation, Special Issue µTAS 96, 85-87), Eigen und Rigler (Proc. Natl. Acad. Sci. USA 91 (1994), 5740-5747) oder Rigler (J. Biotech 41 (1995), 177-186) beschrieben, erfolgen. Vorzugsweise erfolgt eine automatische Sortierungsprozedur, wobei markierte und nicht markierte Partikel in unterschiedliche Verzweigungen des Mikrokanals geleitetwerden. Die Steuerung der Sortierungsprozedur erfolgt vorzugsweise dadurch, dass nach Erkennen eines markierten Partikels im Detektionselement ein externes oder in die Mikrostruktur integriertes Ventil umgeschaltet wird, sodass das markierte Partikel in die dafür vorgesehene Verzweigung des Mikrokanals geleitet wird und anschließend das Ventil wieder umgeschaltet wird, sodass nicht markierte Partikel in die andere Verzweigung des Mikrokanals geleitet werden.

Das erfindungsgemäße Verfahren ist ein Kaskadenprozess, der eine mindestens einmalige Wiederholung der Detektions- und Abtrennschritte umfasst. Während die aus dem Stand der Technik bekannte Prozedur zur Selektion von Einzelmolekülen nur bei extrem hohen Verdünnungen und somit sehr großen Volumina zuverlässig durchführbar ist, wird beim erfindungsgemäßen Verfahren die Konzentration der durch die Detektionsvorrichtung geleiteten Partikel ausreichend hoch eingestellt, sodass das zu untersuchende Gesamtvolumen an Probeflüssigkeit, welches die Gesamtpopulation der Partikel enthält, gering gehalten werden kann.

Für den ersten Selektionszyklus wird eine Partikelkonzentration von 10⁸ bis 10¹⁴ pro 100 µl Probevolumen und bevorzugt 10¹⁰ bis 10¹² Partikel pro 100 µl Probevolumen eingesetzt. Bei diesen Bedingungen nimmt man zwar in Kauf, dass neben dem markierten Partikel auch eine Anzahl weiterer negativer Partikel, üblicherweise 10² bis 10³ Partikel zunächst als positiv eingestuft werden. Durch nachfolgende Selektionszyklen, die mit jeweils verringerter Konzentration gegenüber einem vorhergehenden Zyklus durchgeführt werden, können jedoch schließlich einzelne Partikel, welche die vorbestimmten Eigenschaften aufweisen, isoliert werden. Die Verringerung der Partikelkonzentration wird vorzugsweise so gewählt, dass in einem weiteren Selektionsschritt ein positiver Partikel eindeutig identifiziert werden kann. Die Partikelkonzentration wird pro zyklus um mindestens den Faktor 10⁴, vorzugsweise um den Faktor 10⁶ bis 10⁸ und besonders bevorzugt um ca. den Faktor 10⁷ verringert. Das Probenvolumen erhöht sich dabei im allgemeinen nicht wesentlich, da durch den ersten Selektionszyklus eine signifikante Verringerung der Partikelzahl erzielt wurde. Gegebenenfalls können nach dem zweiten Selektionszyklus noch ein oder mehrere weitere Zyklen durchgeführt werden.

Weiterhin umfasst das erfindungsgemäße Verfahren vorzugsweise das Identifizieren oder/und Charakterisieren der gefundenen Partikel mit der vorbestimmten Eigenschaft. Dieser Schritt kann beispielsweise eine Amplifizierung, z.B. im Falle von Zellen und Viren, eine Vermehrung oder im Falle von Nukleinsäuren eine Amplifikationsreaktion wie PCR oder eine Sequenzierung umfassen. Das identifizierte bzw. charakterisierte Partikel bzw. dessen charakteristische Determinante, z.B. ein auf der Oberfläche präsentiertes Protein, kann anschließend dem jeweils dafür vorgesehenen Verwendungszweck zugeführt oder als Grundlage zur Herstellung einer weiteren kombinatorischen Bibliothek, z.B. durch Mutagenese, eingesetzt werden.

In einer bevorzugten Ausführungsform des erfindungsgemäßen Verfahrens wird nach dem Markieren der Partikel, aber vor dem Einbringen der Partikel in die Detektionsvorrichtung eine Affinitäts-Vorselektionsprozedur vorgenommen. Hierzu erfolgt nach der Markierung, z.B. einer Behandlung der Partikelpopulation mit einem markierten Bindemolekül, ein weiterer Behandlungsschritt mit unmarkierten Bindemolekülen, sodass bei Partikeln, die das markierte Bindemolekül nur schwach gebunden haben, durch Dissoziation ein Austausch des markierten Bindemoleküls gegen das unmarkierte Bindemolekül stattfinden kann. Diese schwach bindefähigen und somit unerwünschten Partikel werden in diesem Fall bei der Selektionsprozedur von vornherein nicht als positiv erkannt und scheiden daher aus. Durch Einstellung der Bedingungen bei der Behandlung von markierten Partikeln mit unmarkierten Bindemolekülen kann die "Stringenz" der Affinitäts-Vorselektion eingestellt werden. Durch Erhöhung der Zeitdauer der Inkubation, der Temperatur und der Konzentration unmarkierter Bindemoleküle wird eine Erhöhung der Stringenz erreicht.

Falls die vorbestimmte Eigenschaft des Partikels darin besteht, selektiv an eine Zielsubstanz, aber möglichst nicht an eine mit der Zielsubstanz nahe verwandte Substanz zu binden, kann vor oder/und nach der Markierung der Zielsubstanz eine Inkubation mit der nahe verwandten Substanz erfolgen, sodass Partikel mit einer Affinität für die nahe verwandte Substanz bei der Selektionsprozedur von vornherein nicht erfasst werden.

Ein weiterer Gegenstand der Erfindung ist die Verwendung einer Vorrichtung zur Selektion eines Partikels mit einer vorbestimmten Eigenschaft aus einer Population umfassend eine Vielzahl von unterschiedlichen Partikeln umfassend:
(a) einen optisch transparenten Mikrokanal,
(b) Mittel zum Einbringen von Partikeln in den Mikrokanal,
(c) Mittel zur Detektion einer Markierung auf einem durch den Mikrokanal geleiteten Partikel,
(d) Mittel zum Abtrennen eines markierten Partikels von nicht markierten Partikeln,
wobei die Mittel (c) und (d) derart ausgebildet sind, dass sie eine mindestens einmalige Wiederholung der Detektions-/Abtrennprozedur vorsehen, zur Durchführung des erfindungsgemäßen Verfahrens.

Die Vorrichtung enthält vorzugsweise weiterhin automatische Manipulationsvorrichtungen, Heiz- oder Kühleinrichtungen wie Peltier-Elemente, Reservoirs und gegebenenfalls Zufuhrleitungen für Probeflüssigkeit und Reagenzien sowie elektronische Auswertungsgeräte.

Die Vorrichtung ist insbesondere zur Durchführung des erfindungsgemäßen Verfahrens geeignet.

Weiterhin soll die Erfindung durch die nachfolgenden Figuren erläutert werden. Es zeigen:

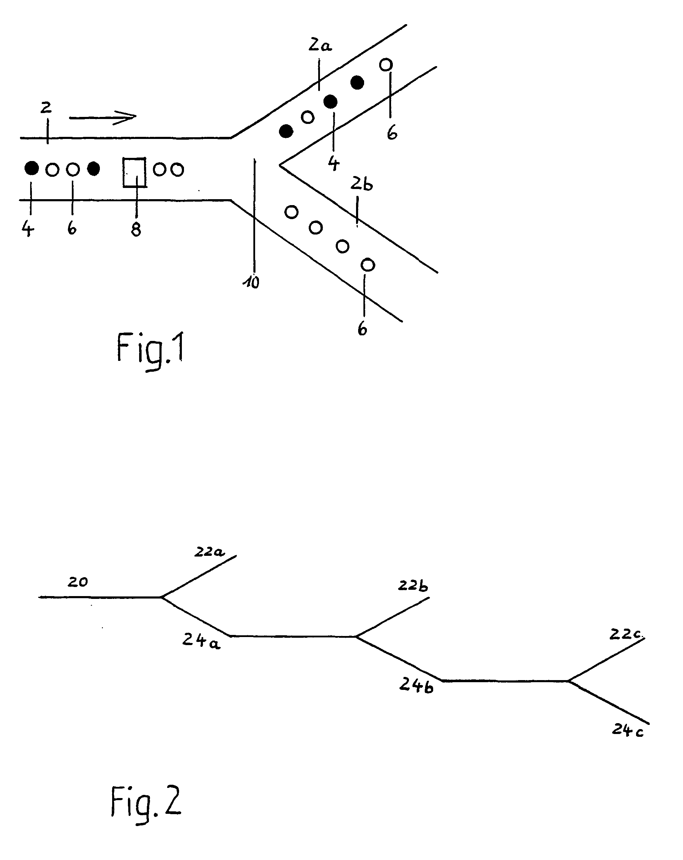

- Figur 1: einen Ausschnitt einer Vorrichtung zur Durchführung des erfindungsgemäßen Verfahrens. Durch einen Mikrokanal (2) werden markierte Partikel (4) und nicht markierte Partikel (6) zu einem Detektianselement (8) transportiert. Bei Erkennung eines markierten Partikels (4) durch das Detektionselement (8) werden Ventile (nicht gezeigt) aktiviert, die an der Verzweigungsstelle (10) des Mikrokanals betätigt werden, sodass die markierten Partikel (4) in die Verzweigung (2a) und unmarkierte Partikel in die Verzweigung (2b) geleitet werden. **Die Partikelkonzentration oder/und die** Durchflussgeschwindigkeit durch den Mikrokanal werden beim erfindungsgemäßen Verfahren derart groß gewählt, sodass auch ein Eintritt nicht markierter Partikel (6) in die für markierte Partikel vorgesehene Verzweigung (2a) erfolgt. Durch gegebenenfalls mehrfache Wiederholung der Selektions-/Abtrennprozedur werden schließlich nur markierte Partikel erhalten.
- Figur 2: das Prinzip der kaskadenartigen Selektions-/Abtrennprozedur. Die durch den Mikrokanal (20) geleiteten Partikel werden - wie in Figur 1 gezeigt - an einer ersten Verzweigung in einen für die markierten Partikel vorgesehenen Arm (24a) und einen für die nicht markierten Partikel vorgesehen Arm (22a) des Mikrokanals aufgetrennt. Die durch den Kanalarm (24a) geleiteten Partikel werden an einer weiteren Verzweigung erneut in einen für markierte Partikel vorgesehen Arm (24b) und einen für nicht markierte Partikel vorgesehenen Arm (22b) aufgetrennt. Gegebenenfalls kann noch eine weitere Auftrennung der durch den Mikrokanal (24b) strömenden Partikel in einen Arm (24c) und einen Arm (22c) erfolgen.

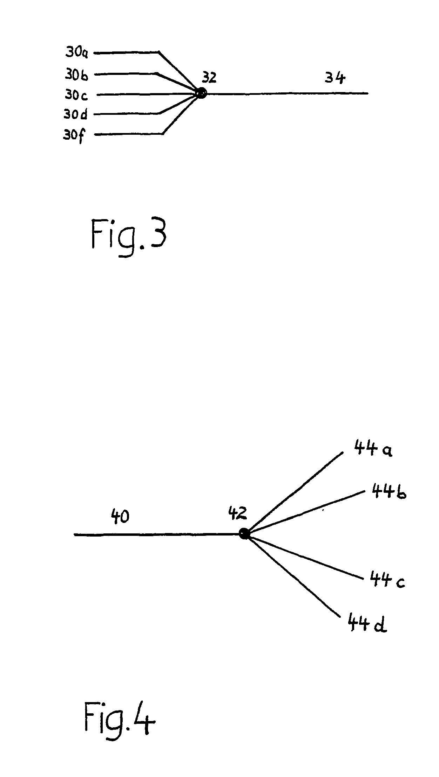

- Figur 3: eine Ausführungsform der erfindungsgemäßen Vorrichtung mit multiplen Eingängen. Partikel aus unterschiedlichen Subbibliotheken (30a, 30b, 30c, 30d, 30f) können an einem Schaltventil (32) in einen Mikrokanal (34) eingeleitet und dort der in Figur 1 und Figur 2 gezeigten Kaskaden-Selektions-/Abtrennprozedur unterzogen werden.
- Figur 4: eine Ausführungsform der erfindungsgemäßen Vorrichtung mit multiplen Ausgängen. Die durch einen Mikrokanal (40) strömenden Partikel werden an der Verzweigungsstelle (42) in mehrere Arme (44a, 44b, 44c, 44d) aufgetrennt. Die Auftrennung in mehr als zwei Arme kann beispielsweise bei Verwendung mehrerer Markierungsgruppen zweckmäßig sein, um Partikel mit keiner, jeweils einer oder mehreren Markierungsgruppen voneinander zu trennen. Alternativ kann die Trennung auch aufgrund der Intensität der Markierung durch Einstellung entsprechender Cutoff-Werte am Detektor erfolgen.

## Patentansprüche

1. Verfahren zur Selektion eines Partikels mit einer vorbestimmten Eigenschaft aus einer Population umfassend eine Vielzahl von unterschiedlichen Partikeln, umfassend die Schritte:
(a) Bereitstellen einer Population von unterschiedlichen Partikeln,
(b) Markieren von Partikeln, die die vorbestimmte Eigenschaft aufweisen,
(c) Leiten der Partikel in einem Mikrokanal durch ein Detektionselement, das zwischen markierten und nicht markierten Partikeln unterscheiden kann, wobei das Detektionselement ein Volumen von 0,1-20 x 10⁻¹⁵ l aufweist, unter Bedingungen, bei denen neben den markierten Partikeln auch eine Anzahl nicht markierter Partikel zunächst als markiert eingestuft werden,
(d) Abtrennen der unter (c) als markiert eingestuften Partikel, und
(e) mindestens einmaliges Wiederholen der Schritte (c) und (d),
wobei die Bedingungen in Schritt (c) im ersten Zyklus der Schritte (c) und (d) eine Konzentration der Partikel im Mikrokanal von 10⁸ bis 10¹⁴ pro 100 µl Probeflüssigkeit umfassen, und wobei die Konzentration der Partikel im Probenvolumen in einem nachfolgenden Zyklus der Schritte (c) und (d) um mindestens den Faktor 10⁴ gegenüber einem vorhergehenden Zyklus verringert wird, bis markierte Partikel eindeutig als markiert identifiziert werden können.

2. Verfahren nach Anspruch 1,
**dadurch gekennzeichnet,**
**dass** die Partikel aus Zellen, Teilen von Zelloberflächen, Zellorganellen, Viren, Nukleinsäuren, Proteinen und niedermolekularen Substanzen ausgewählt werden.

3. Verfahren nach Anspruch 1 oder 2,
**dadurch gekennzeichnet,**
**dass** die Population eine kombinatorische Bibliothek umfasst.

4. Verfahren nach Anspruch 3,
**dadurch gekennzeichnet,**
**dass** die kombinatorische Bibliothek aus genetischen Packungen wie Phagen, Zellen, Sporen oder Ribosomen ausgewählt wird.

5. Verfahren nach einem der Ansprüche 1 bis 4,
**dadurch gekennzeichnet,**
**dass** die Population mehr als 10⁸ unterschiedliche Partikel umfasst.

6. Verfahren nach Anspruch 5,
**dadurch gekennzeichnet,**
**dass** die Population mehr als 10¹² unterschiedliche Partikel umfasst.

7. Verfahren nach einem der Ansprüche 1 bis 6,
**dadurch gekennzeichnet,**
**dass** das Markieren eine Inkubation der Partikel mit einer eine nachweisbare Markierung tragenden Zielsubstanz umfasst.

8. Verfahren nach Anspruch 7,
**dadurch gekennzeichnet,**
**dass** als Markierung eine Fluoreszenzmarkierungsgruppe verwendet wird.

9. Verfahren nach einem der Ansprüche 1 bis 8,
**dadurch gekennzeichnet,**
**dass** die Partikel durch einen Mikrokanal mit einem Durchmesser von 1 bis 100 µm geleitet werden.

10. Verfahren nach einem der Ansprüche 1 bis 9,
**dadurch gekennzeichnet,**
**dass** die Partikel mittels eines hydrodynamischen Flusses durch den Mikrokanal geleitet werden.

11. Verfahren nach einem der Ansprüche 1 bis 10,
**dadurch gekennzeichnet,**
**dass** die Detektion der markierten Partikel durch Fluoreszenz-Korrelationsspektroskopie erfolgt.

12. Verfahren nach einem der Ansprüche 1 bis 10,
**dadurch gekennzeichnet,**
**dass** die Detektion der markierten Partikel durch eine zeitaufgelöste Fluoreszenz-Abklingmessung erfolgt.

13. Verfahren nach einem der Ansprüche 1 bis 12,
**dadurch gekennzeichnet,**
**dass** das Abtrennen das Leiten der markierten Partikel und der nicht markierten Partikel in unterschiedliche Verzweigungen des Mikrokanals umfasst.

14. Verfahren nach einem der vorhergehenden Ansprüche, weiterhin umfassend das Identifizieren oder/und Charakterisieren eines Partikels mit der vorbestimmten Eigenschaft.

15. Verfahren nach einem der vorhergehenden Ansprüche, weiterhin umfassend einen Affinitäts-Vorselektionsschritt, wobei die markierten Partikel Bedingungen ausgesetzt werden, bei denen schwächer markierte Partikel ihre Markierung verlieren.

16. Verfahren nach Anspruch 15,
**dadurch gekennzeichnet,**
**dass** nach dem Markieren eine Inkubation mit einer unmarkierten Zielsubstanz erfolgt.

17. Verwendung einer Vorrichtung zur Selektion eines Partikels mit einer vorbestimmten Eigenschaft aus einer Population umfassend eine Vielzahl von unterschiedlichen Partikeln umfassend:
(a) einen optisch transparenten Mikrokanal,
(b) Mittel zum Einbringen von Partikeln in den Mikrokanal,
(c) Mittel zur Detektion einer Markierung auf einem durch den Mikrokanal geleiteten Partikel,
(d) Mittel zum Abtrennen eines markierten Partikels von nicht markierten Partikeln,
wobei die Mittel (c) und (d) derart ausgebildet sind, dass sie eine mindestens einmalige Wiederholung der Detektions-/Abtrennprozedur vorsehen, zur Durchführung des Verfahrens nach einem der Ansprüche 1 bis 16.

## Claims

1. Method for selecting a particle having a predetermined property from a population comprising a multiplicity of different particles, comprising the following steps:
(a) providing a population of different particles,
(b) labeling particles which have the said predetermined property,
(c) passing the particles in a microchannel through a detection element which can distinguish between labeled and unlabeled particles, the volume of said detection element being 0.1-20x10⁻¹⁵ 1, under conditions under which, in addition to the labeled particles, also a number of unlabeled particles are initially classified as labeled,
(d) removing the particles classified under (c) as labeled, and
(e) repeating at least once the steps (c) and (d),
said conditions in step (c) comprising, in the first cycle of steps (c) and (d), a particle concentration in the microchannel of from 10⁸ to 10¹⁴ per 100 µl of sample fluid, and the particle concentration in the sample volume being reduced in a subsequent cycle of steps (c) and (d) by at least a factor of 10⁴ compared to a preceding cycle, until labeled particles can be identified unambiguously as labeled.

2. Method according to Claim 1, **characterized in that** the particles are selected from the group consisting of cells, cell surface parts, cell organelles, viruses, nucleic acids, proteins and low molecular weight substances.

3. Method according to Claim 1 or 2, **characterized in that** the population comprises a combinatorial library.

4. Method according to Claim 3, **characterized in that** the combinatorial library is selected from genetic packages such as phages, cells, spores or ribosomes.

5. Method according to any of Claims 1 to 4, **characterized in that** the population comprises more than 10⁸ different particles.

6. Method according to Claim 5, **characterized in that** the population comprises more than 10¹² different particles.

7. Method according to any of Claims 1 to 6, **characterized in that** labeling comprises incubating the particles with a target substance carrying a detectable label.

8. Method according to Claim 7, **characterized in that** the label used is a fluorescent labeling group.

9. Method according to any of Claims 1 to 8, **characterized in that** the particles are passed through a microchannel of from 1 to 100 µm in diameter.

10. Method according to any of Claims 1 to 9, **characterized in that** the particles are passed through the microchannel by means of a hydrodynamic flow.

11. Method according to any of Claims 1 to 10, **characterized in that** the labeled particles are detected by fluorescence correlation spectroscopy.

12. Method according to any of Claims 1 to 10, **characterized in that** the labeled particles are detected by means of a time-resolved fluorescence decay measurement.

13. Method according to any of Claims 1 to 12, **characterized in that** removing comprises directing the labeled particles and the unlabeled particles into different branches of the microchannel.

14. Method according to any of the preceding claims, furthermore comprising identifying or/and characterizing a particle having the predetermined property.

15. Method according to-any of the preceding claims, furthermore comprising a preselective affinity step in which the labeled particles are exposed to conditions under which relatively weakly labeled particles lose their label.

16. Method according to Claim 15, **characterized in that** labeling is followed by incubation with an unlabeled target substance.

17. Use of an apparatus for selecting a particle having a predetermined property from a population comprising a multiplicity of different particles, which apparatus comprises:
(a) an optically transparent microchannel,
(b) means for introducing particles into said microchannel,
(c) means for detecting a label on a particle passed through said microchannel,
(d) means for removing a labeled particle from unlabeled particles,
the means (c) and (d) being designed in such a way that they provide for repeating at least once the detection/removal procedure, for carrying out the method according to any of Claims 1 to 16.

## Revendications

1. Procédé de sélection de particules qui présentent une propriété prédéfinie dans une population qui comprend plusieurs particules différentes, le procédé comprenant les étapes qui consistent à :
(a) préparer une population de différentes particules,
(b) marquer les particules qui présentent la propriété prédéterminée,
(c) guider des particules dans un microcanal qui traverse un élément de détection capable de distinguer les particules marquées des particules non marquées, l'élément de détection présentant un volume de 0,1 à 20 x 10⁻¹⁵ 1, dans des conditions dans lesquelles, en plus des particules marquées, un certain nombre de particules non marquées sont d'abord considérées comme étant marquées,
(d) séparation des particules considérées comme marquées au point (c) et
(e) répétition au moins une fois des étapes (c) et (d),
les conditions de l'étape (c) du premier cycle des étapes (c) et (d) comprenant une concentration des particules dans le microcanal de 10⁸ à 10¹⁴ par 100 µl de liquide d'échantillon, la concentration des particules dans le volume d'échantillon au cours du cycle d'étapes (c) et (d) qui suit étant diminuée d'un facteur d'au moins 10⁴ par rapport au cycle précédent jusqu'à ce que les particules marquées puissent être identifiées de manière claire comme étant marquées.

2. Procédé selon la revendication 1, **caractérisé en ce que** les particules sont sélectionnées parmi des cellules, des parties de surface de cellules, des organelles de cellules, des virus, des acides nucléiques, des protéines et des substances à bas poids moléculaire.

3. Procédé selon les revendications 1 ou 2, **caractérisé en ce que** la population comprend une bibliothèque combinatoire.

4. Procédé selon la revendication 3, **caractérisé en ce que** la bibliothèque combinatoire est sélectionnée parmi des ensembles génétiques, par exemple des phages, des cellules, des spores ou des ribosomes.

5. Procédé selon l'une des revendications 1 à 4, **caractérisé en ce que** la population contient plus de 10⁸ particules différentes.

6. Procédé selon la revendication 5, **caractérisé en ce que** la population contient plus de 10¹² particules différentes.

7. Procédé selon l'une des revendications 1 à 6, **caractérisé en ce que** le marquage comprend l'incubation des particules avec une substance-cible qui porte un marquage détectable.

8. Procédé selon la revendication 7, **caractérisé en ce que** comme marquage, on utilise un groupe de marquage fluorescent.

9. Procédé selon l'une des revendications 1 à 8, **caractérisé en ce que** les particules sont guidées dans un microcanal d'un diamètre de 1 à 100 µm.

10. Procédé selon l'une des revendications 1 à 9, **caractérisé en ce que** les particules sont guidées dans le microcanal par un écoulement hydrodynamique.

11. Procédé selon l'une des revendications 1 à 10, **caractérisé en ce que** la détection des particules marquées s'effectue par spectroscopie de corrélation en fluorescence.

12. Procédé selon l'une des revendications 1 à 10, **caractérisé en ce que** la détection des particules marquées s'effectue par la mesure de l'atténuation de la fluorescence en fonction du temps.

13. Procédé selon l'une des revendications 1 à 12, **caractérisé en ce que** la séparation comprend le guidage des particules marquées et des particules non marquées dans des ramifications différentes du microcanal.

14. Procédé selon l'une des revendications précédentes, comprenant en outre l'identification et/ou la caractérisation des particules qui présentent la propriété prédéterminée.

15. Procédé selon l'une des revendications précédentes, qui comprend en outre une étape de présélection par affinité dans laquelle les particules marquées sont exposées à des conditions dans lesquelles les particules plus faiblement marquées perdent leur marquage.

16. Procédé selon la revendication 15, **caractérisé en ce qu'**après le marquage, on effectue une incubation avec une substance-cible non marquée.

17. Utilisation d'un dispositif de sélection d'une particule qui présente une propriété prédéterminée dans une population qui comprend plusieurs particules différentes, le dispositif comprenant :
(a) un microcanal optiquement transparent,
(b) des moyens pour amener des particules dans le microcanal,
(c) des moyens de détection d'un marquage sur les particules guidées dans le microcanal,
(d) des moyens qui séparent les particules marquées des particules non marquées,
les moyens (c) et (d) étant configurés de telle sorte qu'ils répètent au moins une fois la procédure de détection et de séparation,
en vue de l'exécution du procédé selon l'une des revendications 1 à 16.
